Europäisches Patentamt

European Patent Office

Office européen des brevets

(19)

(11) Numéro de publication: **0 115 261**
**A1**

## (12) DEMANDE DE BREVET EUROPEEN

(21) Numéro de dépôt: **83870125.8**

(22) Date de dépôt: **01.12.83**

(51) Int. Cl.³: **A 01 D 19/16**
**A 01 D 33/00**

(30) Priorité: **03.12.82 BE 209651**

(43) Date de publication de la demande:
**08.08.84 Bulletin 84/32**

(84) Etats contractants désignés:
**DE FR GB IT NL**

(71) Demandeur: **Schots, Renald**
**Liebroekstraat 37**
**B-3460 Halen(BE)**

(72) Inventeur: **Schots, Renald**
**Liebroekstraat 37**
**B-3460 Halen(BE)**

(74) Mandataire: **Pieraerts, Jacques et al,**
**Bureau Gevers S.A. rue de Livourne 7, Bte. 1**
**B-1050 Bruxelles(BE)**

(54) **Installation à utiliser sur une machine à arracher les betteraves.**

(57) Installation qui est équipée d'au moins une, mais de préférence trois roues cribleuses (5,6,7) qui réceptionnent les betteraves arrachées et les débarrassent de la majorité de la terre collant aux tubercules, caractérisée en ce qu'elle présente des moyens qui déposent sur le sol, à volonté, les betteraves délivrées par les roues cribleuses en question (5, 6) en une rangée, et cela entre deux positions extrêmes, ce qui entraîne le dépôt des betteraves soit au centre, soit à une extrémité latérale extrême par rapport à la machine.

FIG. 2

EP 0 115 261 A1

1

"Installation à utiliser sur une machine à arracher les betteraves".

Cette invention concerne une installation à utiliser sur une machine à arracher les betteraves ou analogues, installation qui est équipée d'au moins une, mais de préférence trois roues cribleuses qui réceptionnent les betteraves arrachées et les débarrasse de la majorité de la terre collant aux tubercules.

Les tubercules arrachés par une machine à arracher les betteraves sont rassemblées en rangées sur le sol, derrière la machine par les roues cribleuses et/ou des chaînes transporteuses qui font apparaître des ados qui s'étendent parallèlement au sens de déplacement de la machine. Lorsqu'on fait usage de deux roues cribleuses coopérant entre elles, la situation s'aggrave encore. En réalité, il se forme derrière la machine, d'une part une rangée continue de betteraves arrachées et, d'autre part, à une distance de celles-ci et parallèlement à ces dernières, l'ados en question. La présence de cet ados constitue un gros inconvénient et celui-ci doit donc être travaillé séparément afin d'égaliser régulièrement le sol derrière la machine.

L'invention a pour but de prescrire une installation qui permet ultérieurement de ramasser les betteraves déposées sur le sol et de faire disparaître l'ados qui s'est formé lors de la récolte des betteraves.

A cet effet,l'installation selon l'invention présente des moyens qui déposent sur le sol, à volonté, les betteraves délivrées par les roues cribleuses en question, en une rangée, et cela entre deux positions extrêmes, ce qui entraîne le dépôt des betteraves, soit au centre, soit à une extrémité latérale par rapport à la machine.

Dans une forme d'exécution de l'invention appliquée de préférence, les moyens précités sont formés par au moins une mais de préférence deux grilles pivotantes montées à rotation autour d'axes verticaux et coopérant entre elles, qui règlent la distance à laquelle les betteraves sont rassemblées, distance qui est mesurée par rapport à l'axe géométrique de la machine.

Toujours selon une forme de réalisation préférentielle de l'invention, les grilles pivotantes précitées ouvrent un chemin par lequel les betteraves arrachées quittent la roue cribleuse, de l'un ou de l'autre côté d'un déflecteur vertical qui se trouve à l'arrière de la machine.

D'autres détails et avantages de l'invention ressortiront de la description donnée ci-après d'une installation à utiliser sur une machine à arracher des betteraves ou analogues, selon l'invention. Cette description n'est donnée qu'à titre d'exemple et ne limite pas l'invention. Les notations de référence se rapportent aux figures ci-annexées.

La figure 1 est une représentation en perspective, selon une vue par l'arrière, d'une machine à arracher les betteraves équipée d'une installation selon l'invention.

La figure 2 est une représentation schématique selon une vue en plan, de l'installation selon l'invention, dans une première position des grilles pivotantes.

La figure 3 est une représentation schématique, selon une vue en plan, de l'installation selon l'invention, dans une seconde position des grilles pivotantes.

L'installation selon l'invention comporte un châssis 2 qui peut être déplacé sur des roues 1 et un nombre d'éléments usuels, n'appartenant pas à l'invention, tels que notamment des barres d'accouplement 3 destinées à la fixation à l'arrière d'un tracteur 4. Sur le châssis qui est représenté schématiquement par la référence 2, sont montées par exemple trois roues cribleuses (5, 6 et 7) qui peuvent tourner dans un plan horizontal ou sensiblement horizontal. Les deux roues cribleuses (5 et 6) assurent l'amenée, et partiellement le nettoyage, des betteraves ou tubercules analogues arrachés hors du sol par des disques 8 ou des socs. Les betteraves arrachées parviennent finalement sur la roue cribleuse arrière 7.

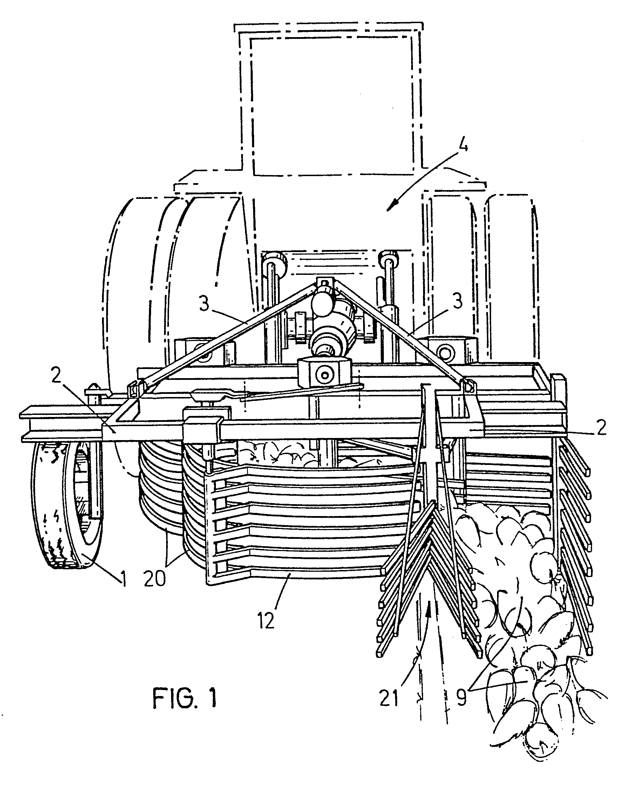

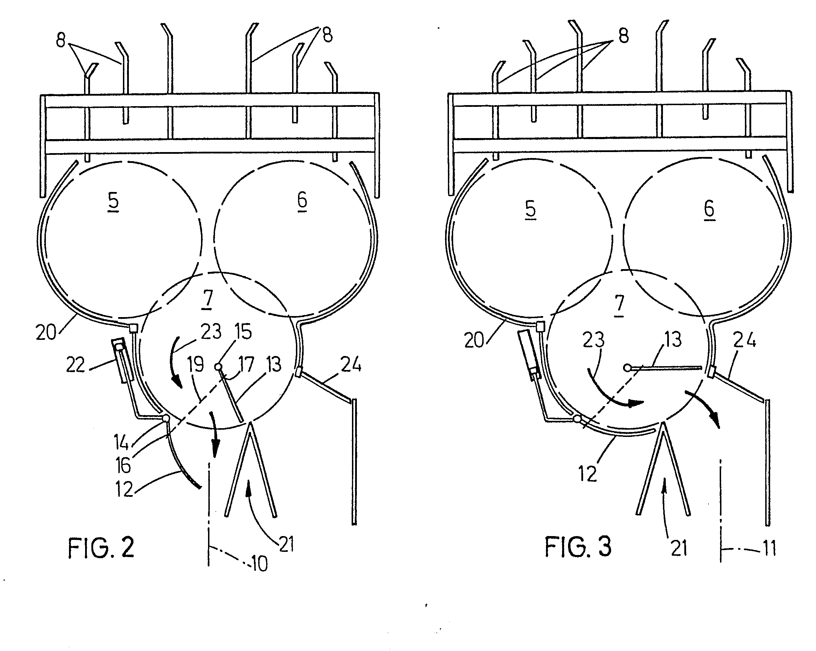

Afin de déposer, à volonté, les betteraves arrachées 9 (figure 1), soit selon l'andain 10 (figure 2), soit selon l'andain (11) (figure 3) il est prévu, selon l'invention, deux grilles pivotantes 12 et 13 coopérant entre elles. Aux figures 2 et 3 les andains sont représentés par des lignes en forme de points tirets.

Les grilles (12 et 13) pivotent autour d'axes verticaux 14 et 15 et sont reliées entre elles en 16 et 17 par une tige 19.

Les betteraves qu'on empêche de tomber des roues cribleuses, principalement de la roue cribleuse 7 en prévoyant un guidage vertical 20, ne peuvent quitter cette dernière roue cribleuse que soit immédiatement à gauche, soit immédiatement à droite du déflecteur vertical 21 fixé à l'arrière.

Selon la position des grilles 12 et 13, les betteraves sont déposées soit selon l'andain 10 (figure 2), soit l'andain 11 (figure 3).

L'entraînement de la grille 12 , c'est-à-dire le pivotement de cette grille autour de l'axe vertical 14 a lieu par des moyens hydrauliques.

Un cylindre hydraulique 22 est représenté schématiquement aux figures 2 et 3.

Dans la position selon la figure 2, les betteraves tombent évidemment à gauche du déflecteur 21, c'est-à-dire, lorsqu'on considère le sens de rotation de la roue cribleuse 7, immédiatement avant ce déflecteur 21. Le sens de rotation de la roue cribleuse 7 est reproduit par la flèche 23. Dans la position selon la figure 1, la grille 13 obture le passage en direction de la partie de la roue cribleuse qui se trouve au-delà du déflecteur 21, toujours lorsqu'on considère le sens de rotation de cette roue cribleuse.

Lorsque les grilles 12 et 13 se trouvent cependant dans la position telle que représentée à la figure 3 , les betteraves ne peuvent quitter la roue cribleuse 7 qu'immédiatement après le déflecteur 21. Ceci est également la position représentée à la figure 1 où l'on remarque clairement que les betteraves 9 sont déposées dans la position située le plus à droite par rapport à l'axe géométrique de la machine.

Toujours en se référant à la figure 3, on remarque que les betteraves quittent la roue cribleuse 7 entre le déflecteur 21 et un guidage fixe 24.

L'avantage de l'installation selon l'invention, réside essentiellement dans le fait qu'il est dorénavant possible de déposer les betteraves dans une installation du type décrit ou d'un type qui peut lui être assimilé, selon des andains qui correspondront à l'ados qui s'est formé par l'action des roues cribleuses elles-mêmes, lors du ramassage des betteraves par les chaînes utilisées à cet effet.

Il est ensuite très simple, lors du ramassage des betteraves déposées en andains de faire disparaître simultanément l'ados dont il a été question plus tôt ou d'égaliser celui-ci;

L'invention n'est évidemment pas limitée à la forme d'exécution décrite ci-dessus et bien des modifications pourraient y être apportées sans , sortir du cadre de la présente demande de brevet.

C'est ainsi que l'installation pourrait se trouver de l'autre côté du plan de symétrie longitudinal de la machine.

REVENDICATIONS.

1. Installation à utiliser sur une machine à arracher les betteraves ou analogues, installation qui est équipée d'au moins un, mais de préférence trois roues cribleuses qui réceptionnent les betteraves arrachées et les débarrassent de la majorité de la terre collant aux tubercules, caractérisée en ce qu'elle présente des moyens qui déposent sur le sol, à volonté, les betteraves 9 délivrées par les roues cribleuses en question (5,6) en une rangée, et cela entre deux positions extrêmes, ce qui entraîne le dépôt des betteraves, soit au centre, soit à une extrémité latérale extrême par rapport à la machine.

2. Installation selon la revendication 1, caractérisée en ce que les moyens précités sont formés par au moins une, mais de préférence deux grilles pivotantes (12,13) montées à rotation autour d'axes verticaux et coopérant entre elles, grilles qui règlent la distance à laquelle les betteraves sont rassemblées, distance qui est mesurée par rapport à l'axe géométrique de la machine.

3. Installation selon la revendication 2, caractérisée en ce que les grilles pivotantes précitées (12,13), ouvrent un chemin par lequel les betteraves arrachées 9 quittent la roue cribleuse de l'un ou de l'autre côté d'un déflecteur déplaçable 21 qui se trouve à l'arrière de la machine.

4. Installation selon l'une des revendications 2 et 3, caractérisée en ce qu'une des grilles précitées (12, 13) est commandée par un cylindre hydraulique 22.

FIG. 1

FIG. 2

FIG. 3

### Office européen des brevets

## RAPPORT DE RECHERCHE EUROPEENNE

EP 83 87 0125

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-1 162 438 (KROMSCHRÖDER)<br>* en entier; figures 1-3 *<br><br>--- | 1,2 | A 01 D 19/16<br>A 01 D 33/00 |
| A | FR-A-1 436 598 (REMY)<br>* page 2, colonne de gauche, paragraphes 1,2; figures 1,2 *<br><br>----- | 1,2 | |
| | | | **DOMAINES TECHNIQUES RECHERCHES (Int. Cl. ³)**<br><br>A 01 D |

Le présent rapport de recherche a été établi pour toutes les revendications

| Lieu de la recherche | Date d'achèvement de la recherche | Examinateur |
|---|---|---|
| LA HAYE | 30-02-1984 | VERMANDER R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82